(19) Europäisches Patentamt
European Patent Office
Office européen des brevets

(11) **EP 0 868 470 B1**

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(21) Anmeldenummer: **96944019.7**

(22) Anmeldetag: **19.12.1996**

(51) Int Cl.⁶: **C08G 77/50**, C08L 83/14, C09D 183/14

(86) Internationale Anmeldenummer:
**PCT/EP96/05721**

(87) Internationale Veröffentlichungsnummer:
**WO 97/23548 (03.07.1997 Gazette 1997/29)**

(54) **ALIPHATISCH UNGESÄTTIGTE RESTE AUFWEISENDE ORGANOPOLYSILOXANE, DEREN HERSTELLUNG UND DEREN VERWENDUNG IN VERNETZBAREN MASSEN**

ORGANOPOLYSILOXANES HAVING ALIPHATICALLY UNSATURATED RADICALS, THE PREPARATION THEREOF AND THE USE THEREOF IN CROSSLINKABLE MATERIALS

ORGANOPOLYSILOXANES POSSEDANT DES RADICAUX ALIPHATIQUEMENT INSATURES, LEUR PREPARATION ET LEUR UTILISATION DANS DES MATERIAUX RETICULABLES

(84) Benannte Vertragsstaaten:
**AT BE CH DE ES FI FR GB IT LI LU NL SE**

(30) Priorität: **22.12.1995 DE 19548474**

(43) Veröffentlichungstag der Anmeldung:
**07.10.1998 Patentblatt 1998/41**

(73) Patentinhaber: **Wacker-Chemie GmbH**
**81737 München (DE)**

(72) Erfinder:
• **WEIDNER, Richard**
**D-84489 Burghausen (DE)**
• **HOCKEMEYER, Friedrich**
**D-84533 Marktl (DE)**

(74) Vertreter: **Budczinski, Angelika**
**c/o Wacker-Chemie GmbH,**
**Hanns-Seidel-Platz 4**
**81737 München (DE)**

(56) Entgegenhaltungen:
**EP-A- 0 439 777**     **EP-A- 0 439 778**
**EP-A- 0 523 660**     **US-A- 5 077 369**

**Beschreibung**

Die Erfindung betrifft in organischen Lösungsmitteln lösliche, aliphatisch ungesättigte Reste aufweisende Organopolysiloxane, Verfahren zu deren Herstellung sowie deren Verwendung in vernetzbaren Organopolysiloxanzusammensetzungen, insbesondere zur Herstellung von Klebstoff abweisenden Organopolysiloxanfilmen.

In EP 0403890 B1 (Bayer AG; ausgegeben am 16.03.1994) bzw. der entsprechenden US-A 5,077,369 sowie EP 0640662 A2 (Bayer AG; ausgegeben am 01.03.1995) werden additionsvernetzende Organopolysiloxanmischungen zur Herstellung von haftungsmindernden Beschichtungen beschrieben. Die in den Mischungen enthaltenen Organopolysiloxane sind verzweigt, wobei die Verzweigungsstellen trifunktionelle Monorganosiloxygruppen, sogenannte T-Einheiten, bzw. tetrafunktionelle Siloxygruppen, sogennannte Q-Einheiten, darstellen und die beschriebenen Organopolysiloxane mindestens 12 T-Einheiten pro Molekül aufweisen. Desweiteren besitzen sie Triorganosiloxygruppen, sogenannte M-Einheiten, wobei ein Teil der M-Einheiten von ungesättigten Resten frei ist und die restlichen M-Einheiten nur je einen ungesättigten Rest tragen. Die Herstellung der Organopolysiloxane erfolgt durch Hydrolyse von Chlorsilanen und anschließender Polymerisation mit niedermolekularen cyclischen Diorganopolysiloxanen. In US-A 4,772,515 (Shin-Etsu Chemical Co.; ausgegeben am 20.09.1988) werden ebenfalls additionsvernetzende Organopolysiloxanmischungen zur Herstellung von klebstoffabweisenden Organopolysiloxanbeschichtungen beansprucht. Die enthaltenen Organopolysiloxane weisen pro Molekül mindestens zwei Verzweigungsstellen in Form von T-Einheiten auf und jedes endständige Si-Atom besitzt mindestens eine ungesättigte Gruppe. Die Herstellung der Organopolysiloxane erfolgt durch Reaktion von Alkyltrimethoxysilanen mit Octamethylcyclotetrasiloxan in Gegenwart eines basischen Katalysators, anschließender Hydrolyse und Umsetzung mit Alkenyldisiloxanen.

Gegenstand der Erfindung sind aliphatisch ungesättigte Reste aufweisende Organopolysiloxane, die in organischen Lösungsmitteln, ausgewählt aus Xylolen und Toluol, bei einer Temperatur von 25°C und einem Druck von 900 bis 1100 hPa zumindest zu 80 Gewichtsprozent, bevorzugt zu 90 Gewichtsprozent, besonders bevorzugt zu 100 Gewichtsprozent, löslich sind und

mindestens eine Einheit der Formel

$$R^1{}_a R_{2-a} SiO_{2/2} \tag{I},$$

mindestens eine Einheit der Formel

$$R^1{}_b R_{3-b} SiO_{1/2} \tag{II},$$

mindestens eine Einheit der Formel

$$O_{1/2} R_2 SiO_x YRSiO_{2/2} \tag{III}$$

sowie gegebenfalls mindestens eine Einheit der Formel

$$O_{1/2} R_2 SiO_x YR_2 SiO_{1/2} \tag{IV}$$

enthalten, wobei

R     gleich oder verschieden sein kann und einen einwertigen, gegebenenfalls substituierten, SiC-gebundenen, aliphatisch gesättigten Kohlenwasserstoffrest bedeutet,

$R^1$     gleich oder verschieden sein kann und einen einwertigen, SiC-gebundenen, gegebenenfalls substituierten, aliphatisch ungesättigten Kohlenwasserstoffrest bedeutet,

a     0, 1 oder 2, bevorzugt 0, ist,

b     0, 1, 2 oder 3, bevorzugt 0 oder 1, ist,

x     0 oder 1, bevorzugt 0, ist und

Y     einen Rest $-(CR^3{}_2)_n CHR^3-$ mit mindestens zwei Kohlenstoffatomen bedeutet mit n gleich 0 oder einer ganzen Zahl von 1 bis 7, bevorzugt 0 oder einer ganze Zahl von 1 bis 3, besonders bevorzugt 0 oder 1, und $R^3$ gleich Wasserstoffatom oder einer für R angegebenen Bedeutung,

mit der Maßgabe, daß das Organopolysiloxan mindestens eine Einheit der Formel (II) mit b verschieden 0 enthält.

Die erfindungsgemäßen Organopolysiloxane können zusätzlich zu den Einheiten der Formel (I), (II), (III) und gegebenenfalls (IV) weitere Siloxaneinheiten, wie z.B. solche der Formel $O_{2/2}RSiO_xYRSiO_{2/2}$ und $O_{2/2}RSiO_xYR_2SiO_{1/2}$, aufweisen, was jedoch nicht bevorzugt ist.

Der Begriff Organopolysiloxane soll im Rahmen der vorliegenden Erfindung sowohl polymere als auch dimere und oligomere Siloxane umfassen.

Vorzugsweise enthalten die erfindungsgemäßen Organopolysiloxane mindestens zwei Einheiten der Formel (II) mit b=1.

Bei dem Rest R handelt es sich vorzugsweise um gegebenenfalls substituierte, einwertige, SiC-gebundene, aliphatisch gesättigte Kohlenwasserstoffreste mit 1 bis 18 Kohlenstoffatomen.

Beispiele für den Rest R sind jeweils Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und der tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest, Cycloalkylreste, wie Cyclopentyl-, Cyclohexyl- und 4-Ethylcyclohexylrest, Cycloheptylreste, Norbornylreste und Methylcyclohexylreste, Arylreste, wie der Phenyl-, Biphenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, sowie der $\alpha$- und der $\beta$-Phenylethylrest.

Beispiele für substituierte Kohlenwasserstoffreste als Rest R sind halogenierte Kohlenwasserstoffreste, wie der Chlormethyl-, 3-Chlorpropyl-, 3,3,3-Trifluorpropyl- und 5,5,5,4,4,3,3-Heptafluorpentylrest, sowie der Chlorphenyl-, Dichlorphenyl- und Trifluortolylrest sowie Cyanoalkylreste, wie der 2-Cyanoethyl- und 3-Cyanopropylrest.

Bei dem Rest R handelt es sich besonders bevorzugt um den Methyl-, n-Decyl-, n-Dodecyl-, n-Tetradecyl-, n-Hexadecyl- und n-Octadecylrest, insbesondere um den Methylrest und den n-Dodecylrest.

Bei Rest $R^1$ handelt es sich bevorzugt um Alkenylreste mit 2 bis 20 Kohlenstoffatomen, besonders bevorzugt um solche mit endständiger Kohlenstoff-Kohlenstoff-Doppelbindung, insbesondere um den Vinylrest.

Beispiele für Rest $R^1$ sind Alkenylreste, wie der Vinyl-, Allyl-, Allyloxy-, $CH_2=CH-(CH_2)_2-$, $CH_2=CH-(CH_2)_3-$, $CH_2=CH-(CH_2)_4-$, $CH_2=CH-(CH_2)_5-$, $CH_2=CH-(CH_2)_6-$, 4-Vinylcyclohexyl- und der 3-Norbornenylrest.

Bevorzugt handelt es sich bei Rest $R^3$ um Wasserstoffatom und den Methylrest, insbesondere um Wasserstoffatom.

Bevorzugt handelt es sich bei Rest Y um $-CH_2-CH_2-$ und $-CH(CH_3)-$.

Insbesondere sind bei den erfindungsgemäßen Organopolysiloxanen mindestens 70 % aller SiC-gebundenen Reste Methylgruppen.

Die erfindungsgemäßen Organopolysiloxane haben bei 25°C eine Viskosität von vorzugsweise 5 bis 500 000 $mm^2/s$, besonders bevorzugt von 10 bis 20 000 $mm^2/s$.

Die erfindungsgemäßen Organopolysiloxane weisen bevorzugt Jodzahlen zwischen 0,5 und 20 auf, wobei die Jodzahl die bei der Addition an die Doppelbindung verbrauchte Jodmenge in Gramm pro 100 Gramm eingesetztes, zu untersuchendes Material angibt.

Die erfindungsgemäßen Organopolysiloxane haben den Vorteil, daß sie eine geringere Viskosität als lineare Organosiloxane eines vergleichbaren Molekulargewichtes besitzen.

Die erfindungsgemäßen Organopolysiloxane haben des weiteren den Vorteil, daß sie eine hohe Viskositätsstabilität bei Lagerung aufweisen.

Die erfindungsgemäßen Organopolysiloxane können nach beliebigen Verfahren hergestellt werden.

Ein weiterer Gegenstand der vorliegenden Erfindung ist ein Verfahren zur Herstellung der erfindungsgemäßen Organopolysiloxane, dadurch gekennzeichnet, daß
lineare Organosiloxane A bestehend aus
mindestens einer Einheit der Formel

$$R^4{}_cR^5{}_{2-c}SiO_{2/2} \tag{V},$$

und/oder mindestens einer Einheit der Formel

$$R^4{}_dR^5{}_{3-d}SiO_{1/2} \tag{VI},$$

wobei

$R^4$  gleich oder verschieden sein kann und eine für $R^1$ angegebene Bedeutung hat,

$R^5$  gleich oder verschieden sein kann und eine für R angegebene Bedeutung hat,

c  0, 1 oder 2, bevorzugt 0, ist und

d  0, 1, 2 oder 3, bevorzugt 0 oder 1, ist,

mit der Maßgabe, daß Organosiloxane A mindestens einen Rest $R^4$ besitzen und mindestens ein Organosiloxan A mit 2 Einheiten der Formel (VI) mit d verschieden 0 anwesend ist,

mit linearem oder cyclischem Organosiloxan B bestehend aus mindestens einer Einheit der Formel

$$H_f R^7{}_g R^6{}_{3-f-g} SiO_{1/2} \qquad \text{(VIII)},$$

und/oder mindestens einer Einheit der Formel

$$H_e R^6{}_{2-e} SiO_{2/2} \qquad \text{(VII)},$$

wobei

$R^6$  gleich oder verschieden sein kann und eine für R angegebene Bedeutung hat,

$R^7$  eine für $R^1$ angegebene Bedeutung hat,

e  0 oder 1 ist,

f  0 oder 1 ist und

g  0, 1, 2 oder 3, bevorzugt 0, ist,

mit der Maßgabe, daß die Summe g+f kleiner oder gleich 3 ist und Organosiloxan B mindestens eine Einheit der Formel (VII) mit e gleich 1 aufweist,

und gegebenenfalls aliphatische Kohlenstoff-Kohlenstoff-Mehrfachbindungen aufweisenden Kohlenwasserstoffen C sowie gegebenenfalls in Gegenwart von inertem organischen Lösungsmittel D,

in Gegenwart eines die Anlagerung von Si-gebundenem Wasserstoff an aliphatische Mehrfachbindung fördernden Katalysators E umgesetzt wird,

mit der Maßgabe, daß in der unumgesetzten Eduktmischung das molare Verhältnis der Einheiten der Formel (VI) mit d verschieden 0 zu den vorhandenen Si-gebundenen Wasserstoffatomen der Einheiten der Formel (VII) mindestens 1,3 : 1, bevorzugt mindestens 1,5 : 1, beträgt.

Bei den im erfindungsgemäßen Verfahren eingesetzten Komponenten kann es sich jeweils um eine Art dieser Komponente wie auch um verschiedene Arten solcher Komponenten handeln.

Bevorzugt handelt es sich bei den im erfindungsgemäßen Verfahren eingesetzten Organosiloxanen A um solche aus Einheiten der Formel (V) mit c=0 und Einheiten der Formel (VI), mit der Maßgabe, daß die Organosiloxane A mindestens eine Einheit der Formel (VI) mit d verschieden 0 besitzen und mindestens ein Organosiloxan A mit 2 Einheiten der Formel (VI) mit d verschieden 0 anwesend ist.

Besonders bevorzugt handelt es sich bei den im erfindungsgemäßen Verfahren eingesetzten Organosiloxanen A um 1,3-Divinyl-1,1,3,3-tetramethyldisiloxan, Vinylpentamethyldisiloxan, Mischpolymerisate aus Vinyldimethylsiloxan- und Dimethylsiloxaneinheiten und Mischpolymerisate aus Vinyldimethylsiloxan-, Trimethylsiloxan- und Dimethylsiloxaneinheiten, mit der Maßgabe, daß mindestens ein Organosiloxan A mit 2 Einheiten der Formel (VI) mit d verschieden 0 in der Reaktionsmasse anwesend ist.

Dabei besitzen die genannten Mischpolymerisate eine Viskosität von vorzugsweise 1 bis 20 000 $mm^2$/s, besonders bevorzugt von 2 bis 5 000 $mm^2$/s bei 25 °C, und eine Jodzahl von vorzugsweise 0,5 bis 100, besonders bevorzugt von 2 bis 80.

Insbesondere handelt es sich bei den im erfindungsgemäßen Verfahren eingesetzten Organosiloxanen A um Mischpolymerisate aus Vinyldimethylsiloxan- und Dimethylsiloxaneinheiten.

Bevorzugt handelt es sich bei den im erfindungsgemäßen Verfahren eingesetzten linearen Organosiloxanen B um Mischpolymerisate aus Dimethylhydrogensiloxan-, Dimethylsiloxan- und Methylhydrogensiloxaneinheiten, Mischpolymerisate aus Trimethylsiloxan-, Dimethylsiloxan- und Methylhydrogensiloxaneinheiten, Mischpolymerisate aus Trimethylsiloxan-, Dimethylhydrogensiloxan-, Dimethylsiloxan- und Methylhydrogensiloxaneinheiten, Mischpolymerisate aus Vinyldimethylsiloxan-, Dimethylsiloxan- und Methylhydrogensiloxaneinheiten mit einer Viskosität von vorzugsweise 2 bis 20 000 $mm^2$/s, besonders bevorzugt von 3 bis 5000 $mm^2$/s bei 25 °C.

Bevorzugt handelt es sich bei den im erfindungsgemäßen Verfahren eingesetzten cyclischen Organosiloxanen B um 1,3,5,7-Tetramethyltetrahydrogencyclotetrasiloxan und 1,3,5,7,9-Pentamethylpentahydrogencyclopentasiloxan.

Besonders bevorzugt handelt es sich bei den im erfindungsgemäßen Verfahren eingesetzten Organosiloxanen B um Mischpolymerisate aus Dimethylhydrogensiloxan-, Dimethylsiloxan- und Methylhydrogensiloxaneinheiten sowie Mischpolymerisate aus Trimethylsiloxan-, Dimethylsiloxan- und Methylhydrogensiloxaneinheiten.

Vorzugsweise enthalten die erfindungsgemäß eingesetzten Organosiloxane B durchschnittlich mindestens zwei Einheiten der Formel (VII) mit e=1.

Die erfindungsgemäß eingesetzten Siloxane A und B sind handelsübliche Produkte bzw. nach in der Siliciumchemie üblichen Verfahren herstellbar.

Bevorzugt handelt es sich bei den im erfindungsgemäßen Verfahren gegebenenfalls eingesetzten, aliphatische Kohlenstoff-Kohlenstoff-Mehrfachbindungen aufweisenden Kohlenwasserstoffen C um 1-Alkene mit 10 bis 18 Kohlenstoffatomen, wie 1-Decen, 1-Dodecen, 1-Tetradecen, 1-Hexadecen und 1-Octadecen, wobei 1-Dodecen und 1-Tetradecen besonders bevorzugt sind.

Wird bei dem erfindungsgemäßen Verfahren Komponente C eingesetzt, so handelt es sich dabei um solche Mengen, daß das molare Verhältnis der Kohlenstoff-Kohlenstoff-Mehrfachbindungen der Komponente C zu Si-gebundenem Wasserstoff der Einheiten der Formel (VII) maximal 0,5 beträgt.

Bevorzugt handelt es sich bei den im erfindungsgemäßen Verfahren gegebenenfalls eingesetzten inerten organischen Lösungsmitteln D um Toluol, Xylole, Tetrahydrofuran und Cyclohexan.

Wird inertes organisches Lösungsmittel im erfindungsgemäßen Verfahren mitverwendet, so handelt es sich vorzugsweise um Mengen von 5 bis 200 Gewichtsprozent, besonders bevorzugt von 10 bis 150 Gewichtsprozent, jeweils bezogen auf das Gesamtgewicht von Organosiloxan A und Organosiloxan B.

Als die Anlagerung von Si-gebundenem Wasserstoff an aliphatische Mehrfachbindung fördernde Katalysatoren E können bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder um einen Komplex aus der Gruppe der Platinmetalle.

Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxan-Komplexe, wie Platin-1,3-Divinyl-1,1,3,3-tetramethyldisiloxan-Komplexe mit oder ohne Gehalt an nachweisbarem anorganisch gebundenen Halogen, Bis-(γ-picolin)-platindichlorid, Trimethylendipyridinplatindichlorid, Dicyclopentadienplatindichlorid, Dimethylsulfoxidethylenplatin-(II)-dichlorid, Cyclooctadien-Platindichlorid, Norbornadien-Platindichlorid, γ-Picolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin oder Ammonium-Platinkomplexe gemäß EP-B 110 370.

Bei dem erfindungsgemäßen Verfahren wird Katalysator E vorzugsweise in Mengen von 0,5 bis 500 Gew.-ppm (Gewichtsteilen je Million Gewichtsteilen), besonders bevorzugt in Mengen von 1 bis 40 Gew.-ppm, jeweils berechnet als elementares Platin und bezogen auf das Gesamtgewicht von Organosiloxan A und Organosiloxan B, eingesetzt.

Das erfindungsgemäße Verfahren wird vorzugsweise beim Druck der umgebenden Atmosphäre, also bei etwa 1000 hPa, durchgeführt. Es kann aber auch bei höheren und niedrigeren Drücken durchgeführt werden. Ferner wird das erfindungsgemäße Verfahren vorzugsweise bei einer Temperatur von 50 bis 150°C, besonders bevorzugt 70 bis 120°C durchgeführt.

Beim erfindungsgemäßen Verfahren können die Edukte in beliebiger Reihenfolge vorgelegt werden und anschließend durch Erwärmen zur Reaktion gebracht werden.

Beispielsweise kann auch das erfindungsgemäße Verfahren in der Weise durchgeführt werden, daß das Organosiloxan A, Katalysator E und gegebenenfalls inertes organisches Lösungsmittel D vorgelegt werden, die Mischung anschließend erwärmt wird und dann das Organosiloxan B langsam zudosiert wird.

Wird beim erfindungsgemäßen Verfahren endständig ungesättigter Kohlenwasserstoff C mitverwendet, so wird dieser vorzugsweise zuerst mit Organosiloxan B in Anwesenheit von Katalysator E und gegebenenfalls Lösungsmittel D umgesetzt und anschließend wird erst Organosiloxan A zum Reaktionsgemisch zur weiteren Umsetzung zugegeben.

Vorzugsweise werden nach Beendigung der erfindungsgemäßen Umsetzung gegebenenfalls noch vorhandene flüchtige Bestandteile, wie Organosiliciumverbindungen, Kohlenwasserstoffe C und organische Lösungsmittel, entfernt, wobei dies bevorzugt durch Destillation, vorzugsweise bei einem Druck von 5 hPa bis zum Druck der umgebenden Atmosphäre und einer Temperatur von 80 bis 180°C, erfolgt.

Das nach dem erfindungsgemäßen Verfahren erhaltene Reaktionsprodukt kann neben den erfindungsgemäßen Organopolysiloxanen noch Organosiloxane A in Mengen von vorzugsweise 0 bis 30 Gewichtsprozent, besonders bevorzugt 0 bis 20 Gewichtsprozent, jeweils bezogen auf das Gesamtgewicht an Reaktionsprodukt, enthalten.

Das erfindungsgemäße Verfahren hat den Vorteil, daß auf einfache Weise und mit hoher Reproduzierbarkeit in organischen Lösungsmitteln lösliche, verzweigte Organopolysiloxane mit variablem Verzweigungsgrad hergestellt werden können.

Das erfindungsgemäße Verfahren hat den Vorteil, daß auf einfache Weise Organopolysiloxane mit definierter Struktur, d.h. mit definierter Zahl und Art an Endgruppen und definierter mittlerer Anzahl an Siloxaneinheiten zwischen den Verzweigungsstellen und definierter mittlerer Anzahl von Siloxaneinheiten in den Seitenketten hergestellt werden können.

Das erfindungsgemäße Verfahren hat des weiteren den Vorteil, daß erfindungsgemäße Organopolysiloxane hergestellt werden können, bei denen die Verzweigungsstellen gleichmäßig verteilt sind.

Die erfindungsgemäßen bzw. erfindungsgemäß hergestellten Organopolysiloxane können für alle Zwecke eingesetzt werden, für die auch bisher Organopolysiloxane mit aliphatisch ungesättigten Resten verwendet worden sind.

Besonders eignen sie sich für die Herstellung von vernetzbaren Organopolysiloxanmassen, vorzugsweise zur Herstellung von klebrige Stoffe abweisenden Überzügen.

Ein weiterer Gegenstand der vorliegenden Erfindung sind vernetzbare Organopolysiloxanzusammensetzungen, die

(1) erfindungsgemäße bzw. erfindungsgemäß hergestellte Organopolysiloxane,
(2) Si-gebundenen Wasserstoff aufweisende Organosiloxane,
(3) die Anlagerung von Si-gebundenem Wasserstoff an aliphatische Mehrfachbindung fördernde Katalysatoren

sowie gegebenenfalls weitere Stoffe enthalten.

Die Komponenten (2) und (3) sowie die gegebenfalls eingesetzten weiteren Stoffe können die gleichen sein, die auch bisher in durch Anlagerung von Si-gebundenem Wasserstoff an aliphatische Xohlenstoff-Kohlenstoff-Mehrfachbindung vernetzbaren Zusammensetzungen eingesetzt werden konnten.

Als Organosiloxane (2), die Si-gebundene Wasserstoffatome aufweisen, werden vorzugsweise lineare, cyclische oder verzweigte Organopolysiloxane aus Einheiten der Formel

$$R^8_h H_i SiO_{\frac{4-h-i}{2}} \qquad\qquad (IX)$$

eingesetzt, wobei

$R^8$ gleich oder verschieden sein kann und eine oben für R angegebene Bedeutung hat,

h 0, 1, 2 oder 3 ist und

i 0, 1 oder 2 ist, mit der Maßgabe, daß die Summe von h+i kleiner oder gleich 3 ist und durchschnittlich mindestens zwei Si-gebundene Wasserstoffatome je Molekül vorliegen.

Obwohl durch Formel (IX) nicht ausgedrückt, können bis zu 8 % der Reste $R^8$ im Organopolysiloxan (2) auch die Bedeutung von Alkoxyrest haben.

Die Organosiloxane (2) besitzen vorzugsweise eine durchschnittliche Viskosität von 5 bis 1 000 mm$^2$/s, besonders bevorzugt von 10 bis 500 mm$^2$/s bei 25°C.

Vorzugsweise sind mindestens 50 % aller SiC-gebundenen Reste von Organosiloxan (2) Methylreste.

Vorzugsweise enthält das erfindungsgemäß eingesetzte Organosiloxan (2) pro Molekül durchschnittlich mindestens 3 Si-gebundene Wasserstoffatome.

Vorzugsweise enthält das erfindungsgemäß eingesetzte Organosiloxan (2) Si-gebundenen Wasserstoff in Mengen von 0,1 bis 2 Gewichtsprozent, besonders bevorzugt 0,5 bis 1,7 Gewichtsprozent, jeweils bezogen auf das Gewicht des Organopolysiloxans (2).

Bevorzugt handelt es sich bei Organopolysiloxan (2) um Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylsiloxan- und Diphenylsiloxaneinheiten, Mischpolymeri-

sate aus Methylhydrogensiloxan-, Phenylmethylsiloxan-, Trimethylsiloxan- und Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Besonders bevorzugt handelt es sich bei Organopolysiloxan (2) um Mischpolymerisate aus Trimethylsiloxan- und Methylhydrogensiloxaneinheiten sowie um Mischpolymerisate aus Trimethylsiloxan-, Dimethylsiloxan- und Methylhydrogensiloxaneinheiten.

Organopolysiloxane (2) sind allgemein bekannte Produkte bzw. nach in der Siliciumchemie gängigen Methoden herstellbar.

Bei den erfindungsgemäßen Zusammensetzungen wird Siloxan (2) in Mengen von vorzugsweise 0,7 bis 5 Mol Si-gebundenen Wasserstoff, besonders bevorzugt 1,1 bis 3 Mol Si-gebundenen Wasserstoff, jeweils bezogen auf 1 Mol aliphatische Kohlenstoff-Kohlenstoff-Mehrfachbindung des erfindungsgemäßen bzw. erfindungsgemäß hergestellten Organopolysiloxans (1), eingesetzt.

Als die Anlagerung von Si-gebundenem Wasserstoff an aliphatische Mehrfachbindung fördernden Katalysator (3) können auch bei den erfindungsgemäßen Organopolysiloxanzusammensetzungen die gleichen Katalysatoren eingesetzt werden, die auch bisher zur Förderung der Anlagerung von Si-gebundenem Wasserstoff an aliphatische Mehrfachbindung eingesetzt werden konnten, wobei es sich bei den Beispielen und bevorzugten Spezies um die oben für Katalysator E angegebenen Stoffe handelt.

Bei den erfindungsgemäßen Organopolysiloxanzusammensetzungen wird Katalysator (3) vorzugsweise in Mengen von 5 bis 500 Gew.-ppm (Gewichtsteilen je Million Gewichtsteilen), besonders bevorzugt in Mengen von 10 bis 200 Gew.-ppm, jeweils berechnet als elementares Platin und bezogen auf das Gesamtgewicht an erfindungsgemäßer Zusammensetzung, eingesetzt.

Die erfindungsgemäßen Organopolysiloxanzusammensetzungen können zusätzlich zu Komponente (1), (2) und (3) die Anlagerung von Si-gebundenen Wasserstoff an aliphatische Mehrfachbindung verzögernde Verbindungen (4), sogenannte Inhibitoren, aufweisen.

Beispiele für gegebenenfalls eingesetzte Inhibitoren (4) sind Alkinole, Fumarsäure, Maleinsäure, Fumarsäure- und Maleinsäureester.

Bei den erfindungsgemäßen Zusammensetzungen wird Inhibitor (4) vorzugsweise in Mengen von 0,001 bis 5 Gewichtsprozent, besonders bevorzugt in Mengen von 0,01 bis 1,0 Gewichtsprozent, jeweils bezogen auf das Gesamtgewicht an erfindungsgemäßer Zusammensetzung, eingesetzt.

Die erfindungsgemäßen Organopolysiloxanzusammensetzungen können zusätzlich zu Komponente (1), (2), (3) und gegebenenfalls (4) Organopolysiliconharze (5) enthalten.

Bei den in den erfindungsgemäßen Zusammensetzungen als Komponente (5) gegebenenfalls verwendeten Organopolysiliconharzen handelt es sich vorzugsweise um sogenannte MQ-Harze aus Einheiten der Formel

$$R^9{}_3SiO_{1/2} \qquad und \qquad SiO_{4/2} \qquad\qquad (X),$$

wobei $R^9$ gleich oder verschieden sein kann und die Bedeutung von Wasserstoff oder einwertigem, SiC-gebundenem, gegebenenfalls substituiertem Kohlenwasserstoffrest hat.

Beispiele für Rest $R^9$ sind Wasserstoffatom und die für Rest R und $R^1$ angegebenen Beispiele, wobei der Methylrest und der Vinylrest bevorzugt sind.

Bevorzugt handelt es sich bei den in den erfindungsgemäßen Zusammensetzungen gegebenenfalls eingesetzten Organopolysiloxanharzen (5) um solche gemäß WO 93/23455 (Wacker-Chemie GmbH; ausgegeben am 25. November 1993) sowie der deutschen Anmeldung P 44 36 817.8 (Wacker-Chemie GmbH; angemeldet am 14. Oktober 1994) bzw. der entsprechenden US-Anmeldung mit der Seriennummer USSN 08/520331 und der deutschen Anmeldung mit dem Aktenzeichen 19502034.0 (Wacker-Chemie GmbH; angemeldet am 24. Januar 1995).

Über die Menge an Organopolysiliconharz (5) können insbesondere die Trenneigenschaften der erfindungsgemäßen Zusammensetzungen reguliert werden. So erhöhen sich z.B. mit zunehmender Menge an Organopolysiloxanharz (5) die Trennwerte.

Wird Organopolysiloxanharz (5) bei den erfindungsgemäßen Zusammensetzungen mitverwendet, so wird es vorzugsweise in Mengen von 0,5 bis 95 Gewichtsprozent, besonders bevorzugt in Mengen von 1 bis 80 Gewichtsprozent, jeweils bezogen auf das Gewicht des erfindungsgemäßen bzw. erfindungsgemäß hergestellten Organopolysiloxans (1), eingesetzt.

Die erfindungsgemäßen Organopolysiloxanzusammensetzungen können des weiteren lineares Organopolysiloxan mit aliphatischer Kohlenstoff-Kohlenstoff-Mehrfachbindung (6) enthalten.

Bei den gegebenenfalls eingesetzten linearen Organosiloxanen mit aliphatischer Kohlenstoff-Kohlenstoff-Mehrfachbindung (6) handelt es sich bevorzugt um die oben beschriebenen Organosiloxane A.

Besonders bevorzugt handelt es sich bei den Organosiloxanen (6) um $\alpha,\omega$-Divinylpolydimethylsiloxane mit einer Viskosität von 20 bis 1 000 mm$^2$/s bei 25°C.

Werden bei den erfindungsgemäßen Zusammensetzungen Organosiloxane (6) mitverwendet, so werden sie in Mengen von 1 bis 40 Gewichtsprozent, besonders bevorzugt in Mengen von 3 bis 25 Gewichtsprozent, jeweils bezogen auf das erfindungsgemäße bzw. erfindungsgemäß hergestellte Organopolysiloxan (1), eingesetzt.

Die erfindungsgemäßen Organopolysiloxanzusammensetzungen können des weiteren aliphatische Kohlenstoff-Kohlenstoff-Mehrfachbindungen aufweisende Kohlenwasserstoffe (7) enthalten.

Bei den gegebenenfalls eingesetzten, aliphatische Kohlenstoff-Kohlenstoff-Mehrfachbindungen aufweisenden Kohlenwasserstoffen (7) handelt es sich bevorzugt um 1-Alkene mit 10 bis 14 Kohlenstoffatomen, wie 1-Decen, 1-Dodecen und 1-Tetradecen.

Werden aliphatische Kohlenstoff-Kohlenstoff-Mehrfachbindungen aufweisende Kohlenwasserstoffe (7) mitverwendet, so werden sie vorzugsweise in Mengen von 0,2 bis 40 Gewichtsprozent, besonders bevorzugt in Mengen von 0,5 bis 25 Gewichtsprozent, jeweils bezogen auf das Gesamtgewicht an erfindungsgemäßer Zusammensetzung, eingesetzt.

Bei den erfindungsgemäßen Organopolysiloxanzusammensetzungen können gegebenenfalls organische Lösungsmittel mitverwendet werden. Werden organische Lösungsmittel mitverwendet, so können es die gleichen sein, die auch bisher in durch Anlagerung von Si-gebundenem Wasserstoff an aliphatische Kohlenstoff-Kohlenstoff-Mehrfachbindung vernetzbaren Zusammensetzungen eingesetzt werden konnten.

Beispiele für solche Lösungsmittel sind Benzine, z.B. Alkangemische mit einem Siedebereich von 80 bis 100°C beim Druck der umgebenden Atmosphäre, n-Heptan, Benzol, Toluol und Xylole, halogenierte Alkane mit 1 bis 6 Kohlenstoffatomen, wie Methylenchlorid, Trichlorethylen und Perchlorethylen, Ether, wie Di-n-butylether, Ester, wie Ethylacetat, und Ketone, wie Methylethylketon und Cyclohexanon.

Werden bei den erfindungsgemäßen Zusammensetzungen organische Lösungsmittel mitverwendet, so werden sie vorzugsweise in Mengen von 5 bis 95 Gewichtsprozent, besonders bevorzugt in Mengen von 10 bis 70 Gewichtsprozent, jeweils bezogen auf das Gesamtgewicht an erfindungsgemäßer Zusammensetzung, eingesetzt.

Des weiteren können die erfindungsgemäßen vernetzbaren Organopolysiloxanmassen übliche und bisher bekannte Additive, wie Konservierungsmittel, Farbstoffe, Fungizide, Weichmacher, etc., enthalten.

Bevorzugt handelt es sich bei den erfindungsgemäßen Massen um solche, die aus den Bestandteilen (1), (2), (3) und gegebenenfalls einem oder mehreren der Bestandteile (4), (5), (6), (7), organischem Lösungsmittel und Additiven bestehen, wobei erfindungsgemäße Massen, die aus Komponenten (1), (2), (3) sowie gegebenenfalls einem oder mehreren der Bestandteile (4), (5) und (6) bestehen, besonders bevorzugt sind.

Die erfindungsgemäßen Organopolysiloxanzusammensetzungen können auch als Emulsion bzw. Dispersion verarbeitet werden. Falls es sich bei den erfindungsgemäßen Zusammensetzungen um Dispersionen handeln soll, können selbstverständlich die zur Herstellung von Dispersionen üblichen Zusatzstoffe, wie z.B. Emulgatoren und Wasser, sowie die üblichen Dispergiervorrichtungen eingesetzt werden.

Die erfindungsgemäßen vernetzbaren Organopolysiloxanzusammensetzungen können nach beliebigen und bekannten Verfahren, wie einfaches Vermischen der einzelnen Bestandteile, hergestellt werden. Die Reihenfolge beim Vermischen der Bestandteile (1) bis (3) und gegebenenfalls (4) bis (7) sowie die gegebenenfalls zugesetzten weiteren Stoffe ist zwar nicht entscheidend, jedoch hat es sich für die Praxis bewährt, den Katalysator (3) dem Gemisch der anderen Bestandteile zuletzt zuzusetzen.

Die erfindungsgemäßen Zusammensetzungen können auch in Form einer sogenannten 2-Komponenten-Siliconkautschukmasse vorliegen. So können in diesem Fall die beiden Komponenten der erfindungsgemäßen Siliconkautschukmassen alle Bestandteile in beliebigen Kombinationen und Mengenverhältnissen enthalten, mit der Maßgabe, daß eine Komponente nicht gleichzeitig die Bestandteile (1), (2) und (3) enthält.

Die erfindungsgemäßen vernetzbaren Zusammensetzungen können für alle Zwecke eingesetzt werden, für die auch bisher durch Anlagerung von Si-gebundenem Wasserstoff an aliphatische Mehrfachbindung vernetzende Organopolysiloxanmassen eingesetzt worden sind.

Die erfindungsgemäßen Zusammensetzungen werden vorzugsweise zur Herstellung von Überzügen, insbesondere von klebrige Stoffe abweisenden Überzügen, wie beispielsweise zur Herstellung von Trennbeschichtungen gegenüber klebenden Artikeln, eingesetzt. So eignen sie sich beispielsweise zum Herstellen von Trenn-, Abdeck- und Mitläuferpapieren einschließlich Mitläuferpapieren, die bei der Herstellung von z.B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck- und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z.B. Pappe, Kunststoff, Holz oder Eisen, das bzw. die für Lagerung und/oder Transport von klebrigen Gütern, wie Klebstoffen, klebrigen Lebensmitteln, z.B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch dem in-line Verfahren.

Das Auftragen der erfindungsgemäßen vernetzbaren Zusammensetzungen auf die Oberflächen, wie etwa die klebrige Stoffe abweisend zu machenden Oberflächen, kann in beliebiger, für die Herstellung von überzügen aus flüssigen Stoffen geeigneter und vielfach bekannter Weise erfolgen, beispielsweise durch Tauchen, Streichen, Gießen, Sprühen, Aufwalzen, Drucken, z.B. mittels einer Offsetgravurüberzugsvorrichtung, Messer- oder Rakel-Beschichtung oder mittels einer Luftbürste, die bevorzugt beim Auftrag der erfindungsgemäßen Zusammensetzung in Emulsions- bzw. Dispersionsform verwendet wird.

Bei den klebrige Stoffe abweisend zu machenden Oberflächen, die im Rahmen der Erfindung behandelt werden können, kann es sich um Oberflächen beliebiger bei Raumtemperatur und 900 bis 1100 hPa fester Stoffe handeln. Beispiele für derartige Oberflächen sind diejenigen von Papier, Holz, Kork und Kunststoffolien, z.B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d.h. nicht mit Chemikalien und/oder polymeren Naturstoffen vorbehandeltes Kraftpapier mit einem Gewicht von 60 bis 150 $g/m^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendige Maßnahmen auf einer Seite glatt sind und deshalb als "einseitig maschinen-glatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen vernetzbaren Organopolysiloxanzusammensetzungen können auf bekannte Art und Weise vernetzen gelassen werden, wobei der gegebenenfalls vorhandene endständig ungesättigte Kohlenwasserstoff (7) bei der Vernetzung chemisch in die Siliconmatrix eingebaut wird.

Die Vernetzung der erfindungsgemäßen Zusammensetzungen erfolgt vorzugsweise bei 50°C bis 200°C, besonders bevorzugt bei 60°C bis 150°C, und einem Druck von 900 bis 1100 hPa. Erfolgt die Vernetzung der erfindungsgemäßen Zusammensetzungen bei niedrigeren Temperaturen, d.h. im Bereich von vorzugsweise 50 bis 110°C, so werden in den erfindungsgemäßen Zusammensetzungen vorzugsweise erfindungsgemäße bzw. erfindungsgemäß hergestellte Organopolysiloxane (1) eingesetzt, die auch Einheiten der Formel (II) mit b=0 enthalten.

Als Energiequellen für die Vernetzung durch Erwärmen werden vorzugsweise Öfen, z.B. Umlufttrockenschränke, Heizkanäle, beheizte Walzen, beheizte Platten oder Wärmestrahlen des Infrarotbereiches verwendet. Die erfindungsgemäßen Zusammensetzungen können außer durch Erwärmen auch durch Bestrahlen mit Ultraviolettlicht oder durch Bestrahlen mit UV- und/oder IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Die erfindungsgemäßen Zusammensetzungen haben den Vorteil, daß sie auch bei niedrigeren Temperaturen rasch vernetzen.

Die erfindungsgemäßen Zusammensetzungen haben des weiteren den Vorteil, daß die erhaltenen vernetzten Organopolysiloxanfilme auch nach längerer Lagerung eine hohe Abriebfestigkeit auf den verschiedensten Substraten besitzen, insbesondere auf glatten Substraten, wie Kunststoffolien oder mit Kunststoff beschichteten Papieren.

Die erfindungsgemäßen Zusammensetzungen haben den Vorteil, daß die erhaltenen vernetzten Organopolysiloxanfilme einen niedrigen Anteil an extrahierbaren Bestandteilen aufweisen.

Die erfindungsgemäßen Zusammensetzungen haben darüberhinaus den Vorteil, daß die erhaltenen vernetzten Organopolysiloxanfilme gegenüber den verschiedensten Klebern zu reproduzierbaren Trennwerten führen.

Die erfindungsgemäßen Zusammensetzungen haben den Vorteil, daß die erhaltenen vernetzten Organopolysiloxanfilme gegenüber den verschiedensten Klebern zu deutlich abgestuften, reproduzierbaren und zeitstabilen Trennwerten führen, wobei die Abstufung der Trennwerte im wesentlichen von den in den erfindungsgemäßen Zusammensetzungen enthaltenen unterschiedlichen Mengen an Organopolysiloxanharz (5) abhängt.

Die erfindungsgemäßen Zusammensetzungen haben den Vorteil, daß die Eigenschaften der vernetzten Organopolysiloxanfilme nicht oder nur sehr wenig von der Lagerzeit der anwendungsfertigen Formulierung vor der Vernetzung abhängen.

In den nachfolgenden Beispielen beziehen sich alle Angaben von Teilen und Prozentsätzen, soweit nicht anders angegeben ist, auf das Gewicht. Sofern nicht anders angegeben, werden die nachfolgenden Beispiele bei einem Druck der umgebenden Atmosphäre, also etwa bei 1000 hPa, und bei Raumtemperatur, also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Die Jodzahl ist ein Maß für den Gehalt an aliphatischen Kohlenstoff-Kohlenstoff-Mehrfachbindungen einer Substanz und ist die Zahl, die angibt, wieviel g Jod von 100 g untersuchter Substanz gebunden werden.

Die Beschichtung der in den folgenden Beispielen angegebenen Substrate mit den erfindungsgemäßen Organopolysiloxanzusammensetzungen erfolgt unter langsamer gleichmäßiger Führung mit Hilfe eines metallischen Ziehstabes, einer sogenannten Handrakel, so daß ein Auftragsgewicht von ca. 1,5g/m$^2$ resultiert, oder zügig unter gleichmäßigem Druck mit Hilfe eines Glasstabes, so daß das Auftragsgewicht ca. 4 g/m$^2$ beträgt.

Die Vernetzung der beschichteten Substrate erfolgt hängend im Umlufttrockenschrank bei den in den folgenden Beispielen genannten Temperaturen und Zeiten.

Die Bestrahlung der beschichteten Substrate erfolgt in einem UV-Gerät der Fa. Beltron Xenon Impulslicht GmbH (D-Roedermark) mit einer 100 Watt UV-Lampe der Fa. Philips. Der Abstand des beschichteten Substrats von der UV-Lampe beträgt 8,5 cm.

Die Bestimmung der Trennwerte erfolgt gemäß FINAT-Test Nr. 10. Dabei wird das beschichtete Substrat unmittelbar nach der Vernetzung mit dem jeweiligen Kleber beklebt und dieser durch zweimaliges Anrollen mit dem FINAT-Roller angedrückt. Anschließend wird das Laminat 20 Stunden bei einer Temperatur von 70°C und einem Druck von 70 g/cm$^2$ gelagert. Nach der Lagerung werden die Trennwerte an einem Computerabzugsgerät der Fa. Roell und Korthaus (CH-Merlshausen) unter einem Abzugswinkel von 180°C und bei einer Abzugsgeschwindigkeit von 300 mm pro Minute bestimmt.

Die Trennwerte werden gegenüber den Kautschukklebern der Bezeichnung "T-4154" und "K-7476" sowie einem Acrylkleber der Bezeichnung "A-7475" (jeweils käuflich erhältlich bei der Fa. Beiersdorf, D-Hamburg) ermittelt.

Zur Beurteilung der Vollständigkeit der Vernetzung der gehärteten Organosiloxanbeschichtungen wird der sogenannte Strichtest herangezogen. Dabei wird unmittelbar nach der Vernetzung der Organosiloxanbeschichtung auf der Substratoberfläche mit der trockenen Fingerkuppe unter gleichmäßig kräftigem Druck zügig ein ca. 25 cm langer Strich über die Siliconschicht gezogen. Bei unvollständiger Vernetzung des Organopolysiloxanfilms wird ein Teil der Siliconoberfläche verwischt. Dies wird als Schmierspur sichtbar, die je nach Stärke mit Noten von 1 bis 6 beurteilt wird, wobei die Note 1 keinen sichtbaren Strich (sehr gute Vernetzung), die Note 3 einen leichten Strich und die Note 6 einen starken Strich (sehr schlechte Vernetzung) bedeutet und die dazwischenliegenden Noten zur weiteren Feinabstufung der Vollständigkeit der Vernetzung dienen.

Die Bestimmung der sogenannten Restklebkraft, die ebenfalls ein Maß für die Vollständigkeit der Vernetzung des Organopolysiloxanfilms darstellt, erfolgt nach FINAT-Test Nr. 11. Dabei wird 65 g/m$^2$ schweres Pergaminpapier mit der erfindungsgemäßen Organosiloxanzusammensetzung beschichtet, vulkanisiert und anschließend das siliconisierte Papier mit dem obengenannten Kautschukkleber der Bezeichnung "T-4154" beklebt und dann nach FINAT-Test Nr. 10 wieder abgezogen. Mit diesem Kleber wird anschließend auf einer Acetatfolie der Trennwert nach FINAT-Test Nr. 10 ermittelt (Trennwert A). Als Vergleichswert wird der Trennwert eines frischen Kautschukklebers auf der Acetatfolie herangezogen (Trennwert B). Die Restklebkraft wird nach folgender Formel ermittelt:

$$\text{Restklebkraft in \%} = \frac{\text{Trennwert A}}{\text{Trennwert B}} \times 100$$

Je höher der Wert für die Restklebkraft ist, desto vollständiger ist die Vernetzung des Organopolysiloxanfilms.

Zur Bestimmung der noch extrahierbaren Siliconbestandteile in der vernetzten Organopolysiloxanbeschichtung wird unmittelbar nach der Härtung aus einem mit der erfindungsgemäßen Organopolysiloxanmasse beschichteten 65 g/m$^2$ schweren Pergaminpapier ein siliconisierter Papierstreifen mit einer Fläche von 5 x 20 cm mittels eines scharfes Messers und einer Schablone ausgeschnitten. Anschließend wird der siliconisierte Papierstreifen locker zusammen gerollt, in ein Probefläschchen mit einem Volumen von 25 cm$^3$ gelegt und dann mit 20 ml Methylisobutylketon versetzt, so daß der siliconisierte Papierstreifen vollständig in das Extraktionsmittel eintaucht. Die Extraktionszeit beträgt 10 Stunden. Anschließend wird von der Extraktionslösung der Siliciumgehalt mittels Atomabsorption ermittelt, aus dem sich nach folgender Formel ein theoretischer Siliconauftrag A (in g/m$^2$) errechnen läßt.

$$\text{Siliciumgehalt (g/ml)} \times 0{,}00528 = \text{Siliconauftrag A (g/m}^2\text{)}$$

Gleichzeitig wird mittels Röntgenfluoreszenz der Siliconauftrag B (in g/m$^2$) des nicht extrahierten siliconisierten Papiers bestimmt. Die extrahierbaren Bestandteile lassen sich dann nach folgender Formel ermitteln:

$$\text{Extrahierbare Bestandteile in \%} = \frac{\text{Siliconauftrag A}}{\text{Siliconauftrag B}} \times 100$$

Zur Beurteilung der Abriebfestigkeit der vernetzten Organosiloxanbeschichtungen wird das siliconisierte Substrat mit Daumen und Zeigefinger gespannt. Anschließend wird unter kräftigem Druck mit dem Finger der anderen Hand auf dem siliconisierten Substrat mehrmals zügig hin und her gerieben. Bei unvollständiger Haftung des Siliconfilms auf dem Substrat wird ein Teil der Siliconbeschichtung abgelöst. Der Abrieb wird entsprechend seines Ausmaßes mit Noten von 1 bis 6 beurteilt, wobei die Note 1 keinen Abrieb, die Note 3 einen leichten und die Note 6 einen starken Abrieb bedeutet und die dazwischenliegenden Noten zur weiteren Feinabstufung des Abriebgrades dienen.

### Beispiel 1

58,2 g eines Mischpolymerisats aus Trimethylsiloxan-, Dimethylsiloxan- und Methylhydrogensiloxaneinheiten mit einer Viskosität von 77 mm$^2$/s und einem Gehalt an Si-gebundenem Wasserstoff von 0,048 %, 200 g eines Mischpolymerisats aus Vinyldimethylsiloxan- und Dimethylsiloxaneinheiten mit einer Viskosität von 157 mm$^2$/s und einer Jodzahl von 7, 258,2 g Toluol und Platin in Form eines Platin-1,3-divinyl-1,1,3,3-tetramethyldisiloxankomplexes in einer solchen Menge, daß die Gesamtmischung einen Platingehalt, bezogen auf elementares Platin, von 6 ppm aufweist, werden in der angegebenen Reihenfolge vermischt. Anschließend wird die Mischung unter Rühren auf 90°C erwärmt und eine Stunde bei 90°C gehalten. Dann werden aus dem Reaktionsgemisch Toluol und noch weitere vorhandene flüchtige Bestandteile bei einer Temperatur von 150°C und einem Druck von 10 hPa abdestilliert. Es werden 255,7 g eines in organischen Lösungsmitteln wie Toluol und Xylol vollständig löslichen Organopolysiloxans mit einer Viskosität von 1656 mm$^2$/s und einer Jodzahl von 3,2 erhalten. Auch nach 10 wöchiger Lagerung bei 25°C ändert sich die Viskosität des Organopolysiloxans nicht.

### Beispiel 2

458,5 g eines Mischpolymerisats aus Trimethylsiloxan-, Dimethylsiloxan- und Methylhydrogensiloxaneinheiten mit einer Viskosität von 115 mm$^2$/s und einem Gehalt an Si-gebundenem Wasserstoff von 0,047 %, 270,8 g eines Mischpolymerisats aus Vinyldimethylsiloxan- und Dimethylsiloxaneinheiten mit einer Viskosität von 42 mm$^2$/s und einer Jodzahl von 20,9, 270,8 g eines Mischpolymerisats aus Vinyldimethylsiloxan- und Dimethylsiloxaneinheiten mit einer Viskosität von 30 mm$^2$/s und einer Jodzahl von 25,7, 428,5 g Toluol und Platin in Form eines Platin-1,3-divinyl-1,1,3,3-tetramethyldisiloxankomplexes in einer solchen Menge, daß die Gesamtmischung einen Platingehalt, bezogen auf elementares Platin, von 3 ppm aufweist, werden in der angegebenen Reihenfolge vermischt. Anschließend wird die Mischung unter Rühren auf 90°C erwärmt und eine Stunde bei 90°C gehalten. Dann werden aus dem Reaktionsgemisch Toluol und noch weitere vorhandene flüchtige Bestandteile bei einer Temperatur von 150°C und einem Druck von 10 hPa abdestilliert. Es werden 975,6 g eines in organischen Lösungsmitteln wie Toluol und Xylol vollständig löslichen Organopolysiloxans mit einer Viskosität von 3055 mm$^2$/s und einer Jodzahl von 7,3 erhalten. Auch nach 10 wöchiger Lagerung bei 25°C ändert sich die Viskosität des Organopolysiloxans nicht.

### Beispiel 3

158 g des in Beispiel 1 verwendeten Mischpolymerisats aus Trimethylsiloxan-, Dimethylsiloxan- und Methylhydrogensiloxaneinheiten, 200 g eines Mischpolymerisats aus Vinyldimethylsiloxan- und Dimethylsiloxaneinheiten mit einer Viskosität von 30 mm$^2$/s und einer Jodzahl von 22,1 und Platin in Form eines Platin-1,3-divinyl-1,1,3,3-tetramethyldisiloxankomplexes in einer solchen Menge, daß die Gesamtmischung einen Platingehalt, bezogen auf elementares Platin, von 7 ppm aufweist, werden in der angegebenen Reihenfolge vermischt. Anschließend wird die Mischung unter Rühren auf 90°C erwärmt und eine Stunde bei 90°C gehalten. Dann werden aus dem Reaktionsgemisch noch vorhandene flüchtige Bestandteile bei einer Temperatur von 150°C und einem Druck von 10 hPa abdestilliert. Es werden 341,3 g eines in organischen Lösungsmitteln wie Toluol und Xylol vollständig löslichen Organopolysiloxans mit einer Viskosität von 680 mm$^2$/s und einer Jodzahl von 6,75 erhalten. Auch nach 10 wöchiger Lagerung bei 25°C ändert sich die Viskosität des Organopolysiloxans nicht.

### Beispiel 4

183,3 g eines Mischpolymerisats aus Trimethylsiloxan-, Dimethylsiloxan- und Methylhydrogensiloxaneinheiten mit einer Viskosität von 30 mm$^2$/s und einem Gehalt an Si-gebundenem Wasserstoff von 0,044 %, jeweils 100 g der in Beispiel 2 verwendeten Mischpolymerisate aus Vinyldimethylsiloxan- und Dimethylsiloxaneinheiten und Platin in Form eines Platin-1,3-divinyl-1,1,3,3-tetramethyldisiloxankomplexes in einer solchen Menge, daß die Gesamtmischung einen Platingehalt, bezogen auf elementares Platin, von 7 ppm aufweist, werden in der angegebenen Reihenfolge vermischt. Anschließend wird die Mischung unter Rühren auf 90°C erwärmt und eine Stunde bei 90°C gehalten. Dann werden aus dem Reaktionsgemisch noch vorhandene flüchtige Bestandteile bei einer Temperatur von 150°C und einem Druck von 10 hPa abdestilliert. Es werden 367,9 g eines in organischen Lösungsmitteln wie Toluol und Xylol vollständig löslichen Organopolysiloxans mit einer Viskosität von 105 mm$^2$/s und einer Jodzahl von 7,1 erhalten. Auch nach 10 wöchiger Lagerung bei 25°C ändert sich die Viskosität des Organopolysiloxans nicht.

## Beispiel 5

Die in Beispiel 4 beschriebene Verfahrensweise wird wiederholt mit der Abänderung, daß anstelle von 183,3 g des Mischpolymerisats aus Trimethylsiloxan-, Dimethylsiloxan- und Methylhydrogensiloxaneinheiten 281,1 g eingesetzt werden. Es werden 468,4 g eines in organischen Lösungsmitteln wie Toluol und Xylol vollständig löslichen Organopolysiloxans mit einer Viskosität von 266 mm$^2$/s und einer Jodzahl von 2,84 erhalten. Auch nach 10 wöchiger Lagerung bei 25°C ändert sich die Viskosität des Organopolysiloxans nicht.

## Beispiel 6

150 g eines Mischpolymerisats aus Trimethylsiloxan-, Dimethylsiloxan- und Methylhydrogensiloxaneinheiten mit einer Viskosität von 64 mm$^2$/s und einem Gehalt an Si-gebundenem Wasserstoff von 0,046 %, 1,74 g 1-Dodecen und Platin in Form eines Platin-1,3-divinyl-1,1,3,3-tetramethyldisiloxankomplexes in einer solchen Menge, daß die Gesamtmischung einen Platingehalt, bezogen auf elementares Platin, von 12 ppm aufweist, werden in der angegebenen Reihenfolge vermischt. Anschließend wird die Mischung unter Rühren auf 90°C erwärmt und eine Stunde bei 90°C gehalten. Dann wird die Reaktionsmischung auf 50°C abgekühlt und mit jeweils 63 g der in Beispiel 2 verwendeten Mischpolymerisate aus Vinyldimethylsiloxan- und Dimethylsiloxaneinheiten versetzt. Anschließend wird das Gemisch auf 90°C erwärmt und eine Stunde bei 90°C gehalten. Dann werden aus dem Reaktionsgemisch noch vorhandene flüchtige Bestandteile bei einer Temperatur von 150°C und einem Druck von 10 hPa abdestilliert. Es werden 265,6 g eines in organischen Lösungsmitteln wie Toluol und Xylol vollständig löslichen Organopolysiloxans mit einer Viskosität von 473 mm$^2$/s und einer Jodzahl von 5,3 erhalten. Auch nach 10 wöchiger Lagerung bei 25°C ändert sich die Viskosität des Organopolysiloxans nicht. $^1$H-NMR-Messungen zeigen, daß der endständig ungesättigte Kohlenwasserstoff in das Organosiloxan chemisch eingebaut wurde.

## Beispiel 7

158 g eines Mischpolymerisats aus Dimethylhydrogensiloxan-, Dimethylsiloxan- und Methylhydrogensiloxaneinheiten mit einer Viskosität von 94 mm$^2$/s und einem Gehalt an Si-gebundenem Wasserstoff von 0,048%, 200 g des in Beispiel 3 verwendeten Mischpolymerisats aus Vinyldimethylsiloxan- und Dimethylsiloxaneinheiten und Platin in Form eines Platin-1,3-divinyl-1,1,3,3-tetramethyldisiloxankomplexes in einer solchen Menge, daß die Gesamtmischung einen Platingehalt, bezogen auf elementares Platin, von 7 ppm aufweist, werden in der angegebenen Reihenfolge vermischt. Anschließend wird die Mischung unter Rühren auf 90°C erwärmt und eine Stunde bei 90°C gehalten. Dann werden aus dem Reaktionsgemisch noch vorhandene flüchtige Bestandteile bei einer Temperatur von 150°C und einem Druck von 10 hPa abdestilliert. Es werden 343,4 g eines in organischen Lösungsmitteln wie Toluol und Xylol vollständig löslichen Organopolysiloxans mit einer Viskosität von 460 mm$^2$/s und einer Jodzahl von 6,9 erhalten. Auch nach 10 wöchiger Lagerung bei 25°C ändert sich die Viskosität des Organopolysiloxans nicht.

## Beispiel 8

283 g des in Beispiel 7 verwendeten Mischpolymerisats aus Dimethylhydrogensiloxan-, Dimethylsiloxan- und Methylhydrogensiloxaneinheiten, 25 g 1,3-Divinyl-1,1,3,3-tetramethyldisiloxan und Platin in Form eines Platin-1,3-divinyl-1,1,3,3-tetramethyldisiloxankomplexes in einer solchen Menge, daß die Gesamtmischung einen Platingehalt, bezogen auf elementares Platin, von 9 ppm aufweist, werden in der angegebenen Reihenfolge vermischt. Anschließend wird die Mischung unter Rühren auf 90°C erwärmt und eine Stunde bei 90°C gehalten. Dann werden aus dem Reaktionsgemisch noch vorhandene flüchtige Bestandteile bei einer Temperatur von 150°C und einem Druck von 10 hPa abdestilliert. Es werden 293,5 g eines in organischen Lösungsmitteln wie Toluol und Xylol vollständig löslichen Organopolysiloxans mit einer Viskosität von 623 mm$^2$/s und einer Jodzahl von 5,6 erhalten. Auch nach 10 wöchiger Lagerung bei 25°C ändert sich die Viskosität des Organopolysiloxans nicht.

**EP 0 868 470 B1**

**Beispiel 9**

58,2 g des in Beispiel 7 verwendeten Mischpolymerisats aus Dimethylhydrogensiloxan-, Dimethylsiloxan- und Methylhydrogensiloxaneinheiten, 200 g des in Beispiel 1 verwendeten Mischpolymerisats aus Vinyldimethylsiloxan- und Dimethylsiloxaneinheiten, 258 g Toluol und Platin in Form eines Platin-1,3-divinyl-1,1,3,3-tetramethyldisiloxankomplexes in einer solchen Menge, daß die Gesamtmischung einen Platingehalt, bezogen auf elementares Platin, von 7 ppm aufweist, werden in der angegebenen Reihenfolge vermischt. Anschließend wird die Mischung unter Rühren auf 90°C erwärmt und eine Stunde bei 90°C gehalten. Dann werden aus dem Reaktionsgemisch Toluol und noch weitere vorhandene flüchtige Bestandteile bei einer Temperatur von 150°C und einem Druck von 10 hPa abdestilliert. Es werden 255,7 g eines in organischen Lösungsmitteln wie Toluol und Xylol vollständig löslichen Organopolysiloxans mit einer Viskosität von 1716 mm$^2$/s und einer Jodzahl von 3,2 erhalten. Auch nach 10 wöchiger Lagerung bei 25°C ändert sich die Viskosität des Organopolysiloxans nicht.

**Beispiel 10**

132 g eines Mischpolymerisats aus Dimethylhydrogensiloxan-, Dimethylsiloxan- und Methylhydrogensiloxaneinheiten mit einer Viskosität von 66 mm$^2$/s und einem Gehalt an Si-gebundenem Wasserstoff von 0,061 %, jeweils 100 g der in Beispiel 2 verwendeten Mischpolymerisate aus Vinyldimethylsiloxan- und Dimethylsiloxaneinheiten und Platin in Form eines Platin-1,3-divinyl-1,1,3,3-tetramethyldisiloxankomplexes in einer solchen Menge, daß die Gesamtmischung einen Platingehalt, bezogen auf elementares Platin, von 7 ppm aufweist, werden in der angegebenen Reihenfolge vermischt. Anschließend wird die Mischung unter Rühren auf 90°C erwärmt und eine Stunde bei 90°C gehalten. Dann werden aus dem Reaktionsgemisch noch vorhandene flüchtige Bestandteile bei einer Temperatur von 150°C und einem Druck von 10 hPa abdestilliert. Es werden 317,4 g eines in organischen Lösungsmitteln wie Toluol und Xylol vollständig löslichen Organopolysiloxans mit einer Viskosität von 462 mm$^2$/s und einer Jodzahl von 7,7 erhalten. Auch nach 10 wöchiger Lagerung bei 25°C ändert sich die Viskosität des Organopolysiloxans nicht.

**Beispiel 11**

Die in Beispiel 10 beschriebene Verfahrensweise wird wiederholt mit der Abänderung, daß anstelle von 132 g des Mischpolymerisats aus Dimethylhydrogensiloxan-, Dimethylsiloxan- und Methylhydrogensiloxaneinheiten 152 g eingesetzt werden. Es werden 336,5 g eines in organischen Lösungsmitteln wie Toluol und Xylol vollständig löslichen Organopolysiloxans mit einer Viskosität von 928 mm$^2$/s und einer Jodzahl von 6,2 erhalten. Auch nach 10 wöchiger Lagerung bei 25 °C ändert sich die Viskosität des Organopolysiloxans nicht.

**Beispiel 12**

Durch Vermischen der nachfolgend genannten Bestandteile wird eine Beschichtungsmasse I hergestellt:

| 100 | Teile Organopolysiloxan gemäß Beispiel 3, |
| 0,09 | Teile Ethinylcyclohexanol, |

ein Mischpolymerisat aus Trimethylsiloxan-, Dimethylsiloxan- und Methylhydrogensiloxaneinheiten mit einer Viskosität von 25 mm$^2$/s und einem Gehalt an Si-gebundenem Wasserstoff von 1,62 % in einer solchen Menge, daß das molare Verhältnis der Si-gebundenen Wasserstoffatome zu den Vinylgruppen des eingesetzten erfindungsgemäßen Organopolysiloxans den Wert 2 hat,
und Platin in Form eines Platin-1,3-divinyl-1,1,3,3-tetramethyldisiloxan-Komplexes in einer solchen Menge, daß die gesamte Mischung einen Platingehalt von 100 ppm, bezogen auf elementares Platin, aufweist.
Eine Beschichtungsmasse II wird analog der Beschichtungsmasse I hergestellt, jedoch mit der Abänderung, daß anstelle von 100 Teilen Organopolysiloxan gemäß Beispiel 3 100 Teile Organopolysiloxan gemäß Beispiel 7 eingesetzt werden.
Die so zubereiteten Beschichtungsmassen I und II werden unmittelbar nach der Herstellung mit einem Glasstab auf 65 g/m$^2$ schwere Pergaminpapiere aufgezogen, so daß das Auftragsgewicht ca. 4 g/m$^2$ beträgt.
Anschließend werden unmittelbar nach der Beschichtung die beschichteten Papiere bei 85°C bzw. bei 150°C und den in Tabelle 1 angegebenen verschiedenen Zeiten gehärtet und mittels des Fingerstrichtestes und des Tests zur Abriebfestigkeit beurteilt.
Zur Bestimmung der Trennwerte und der Restklebkraft werden die beschichteten Papiere 5 Sekunden bei 150 °C gehärtet.

13

Die Ergebnisse finden sich in Tabelle 1.

**Vergleichsbeispiel 1**

Die in Beispiel 12 beschriebene Arbeitsweise wird wiederholt mit der Abänderung, daß eine Beschichtungsmasse eingesetzt wird, die anstelle von 100 Teilen des Organopolysiloxans gemäß Beispiel 3 100 Teile eines linearen Mischpolymerisats aus Vinyldimethylsiloxan- und Dimethylsiloxaneinheiten mit einer Viskosität von 195 mm$^2$/s und einer Jodzahl von 6,8 enthält (Beschichtungsmasse Verl).

Die Ergebnisse finden sich in Tabelle 1.

## Tabelle 1

| Mas-se | Vernetzungstemperatur | | | | | Rest-kleb-kraft [%] | Trennwerte [cN/cm] | | |
|---|---|---|---|---|---|---|---|---|---|
| | 85 °C | | | | 150°C | | Kleber | | |
| | Vernetzungszeit [s] | | | | | | | | |
| | 8 | 10 | 12 | 15 | 4 | | T-4154 | K-7476 | A-7475 |
| | Fingerstrichtest | | | | | | | | |
| I | 2-3 | 2 | 1-2 | 1 | 1 | 119 | 2,9 | 7,1 | 6,9 |
| II | 2 | 1 | 1 | 1 | 1 | 121 | 5,0 | 12,7 | 7,8 |
| Verl | 3 | 2-3 | 2 | 1 | 1 | 111 | 3,1 | 11,7 | 7,3 |

Bei der Härtungszeit, bei der die beschichteten Papiere hinsichtlich des Fingerstrichstests mit der Note 1 beurteilt werden, wird auch der unmittelbar nach der Härtung durchgeführte Test zur Abriebfestigkeit mit der Note 1 beurteilt.

**Beispiel 13**

Die in Beispiel 12 beschriebene Arbeitsweise wird wiederholt mit der Abänderung, daß anstelle des Mischpolymerisats aus Trimethylsiloxan-, Dimethylsiloxan- und Methylhydrogensiloxaneinheiten mit einer Viskosität von 25 mm$^2$/s und einem Gehalt an Si-gebundenem Wasserstoff von 1,62 % ein Mischpolymerisat aus Trimethylsiloxan-, Dimethylsiloxan- und Methylhydrogensiloxaneinheiten mit einer Viskosität von 39 mm$^2$/s und einem Gehalt an Si-gebundenem Wasserstoff von 1,17 % ebenfalls in einer solchen Menge eingesetzt wird, daß das molare Verhältnis der Si-gebundenen Wasserstoffatome zu den Vinylgruppen des gemäß Beispiel 3 bzw. gemäß Beispiel 7 hergestellten Organopolysiloxans den Wert 2 hat. Es resultieren die Beschichtungsmasse III, die auf dem Organopolysiloxan gemäß Beispiel 3 basiert, und die Beschichtungsmasse IV, die auf dem Organopolysiloxan gemäß Beispiel 7 basiert. Die Ergebnisse finden sich in Tabelle 2.

**Vergleichsbeispiel 2**

Die in dem Vergleichsbeispiel 1 beschriebene Arbeitsweise wird wiederholt mit der Abänderung, daß anstelle des Mischpolymerisats aus Trimethylsiloxan-, Dimethylsiloxan- und Methylhydrogensiloxaneinheiten mit einer Viskosität von 25 mm$^2$/s und einem Gehalt an Si-gebundenem Wasserstoff von 1,62 % ein Mischpolymerisat aus Trimethylsiloxan-, Dimethylsiloxan- und Methylhydrogensiloxaneinheiten mit einer Viskosität von 39 mm$^2$/s und einem Gehalt an Si-gebundenem Wasserstoff von 1,17 % ebenfalls in einer solchen Menge eingesetzt wird, daß das molare Verhältnis der Si-gebundenen Wasserstoffatome zu den Vinylgruppen des eingesetzten linearen Organopolysiloxans den Wert 2 hat (Beschichtungsmasse Ver2). Die Ergebnisse finden sich in Tabelle 2.

## Tabelle 2

| Mas-se | Vernetzungstemperatur 85 °C | | | | Rest-kleb-kraft [%] | Abriebfestigkeit nach einer Härtungszeit von 10 Sekunden und einer Temperatur von 85°C | |
|---|---|---|---|---|---|---|---|
| | Vernetzungszeit [s] | | | | | unmittelbar nach der Härtung | nach drei Tagen |
| | 4 | 6 | 8 | 10 | | | |
| | Fingerstrichtest | | | | | | |
| III | 4 | 1-2 | 1 | 1 | 119 | 1 | 1 |
| IV | 3 | 1 | 1 | 1 | 121 | 1 | 2 |
| Ver2 | -* | 3 | 1-2 | 1 | 111 | 1 | 3 |

*) keine Meßergebnisse vorhanden

**Beispiel 14**

Die Beschichtungsmasse I und II gemäß Beispiel 12 werden jeweils unmittelbar nach der Herstellung bzw. nach einer Lagerzeit von 2 Stunden mit einer Handrakel auf 65 g/m$^2$ schweres Pergaminpapier aufgezogen, so daß das Auftragsgewicht jeweils ca. 1,5 g/m$^2$ beträgt.

Anschließend werden unmittelbar nach der Beschichtung die beschichteten Papiere bei 85 °C verschiedene Zeiten gehärtet und unmittelbar nach der Härtung bzw. nach unterschiedlicher Lagerung der gehärteten beschichteten Papiere die extrahierbaren Siliconbestandteile bestimmt.

Die Ergebnisse finden sich in Tabelle 3.

Bei der Beschichtungsmasse II liegt der Wert für die extrahierbaren Bestandteile bei Beschichtung unmittelbar nach Herstellung der Beschichtungsmasse und unmittelbar nach Härtung bei einer Vernetzungstemperatur von 150°C und einer Härtungszeit von 5 Sekunden bei 1,9 %.

## Tabelle 3

| Masse | Lagerzeit der Masse nach der Herstellung in Stunden | | | | | | Lagerzeit der Masse: 0 Stunden — Vernetzungszeit: 12 s — Lagerzeit des gehärteten Papiers [min] | | | | |
| --- | --- | --- | --- | --- | --- | --- | --- | --- | --- | --- | --- |
| | 0 | | | 2 | | | | | | | |
| | Vernetzungszeit [s] | | | | | | | | | | |
| | 16 | 20 | 30 | 16 | 20 | 30 | 5 | 15 | 60 | 120 | 240 |
| | Extrahierbare Bestandteile [%] | | | | | | | | | | |
| I | 11,6 | 10,4 | 8,7 | 17,5 | 16,0 | 9,7 | 12,1 | 10,9 | 7,9 | 8,2 | 7,4 |
| II | 7,2 | 5,3 | 3,9 | 20,4 | 12,6 | 9,4 | 10,2 | 8,2 | 3,6 | 3,1 | 2,1 |
| Verl | 15,6 | 12,4 | 7,9 | 40,7 | 24,8 | 16,3 | 30,1 | 17,2 | 11,3 | 7,9 | 6,0 |

**Vergleichsbeispiel 3**

Die in Beispiel 14 beschriebene Arbeitsweise wird wiederholt mit der Abänderung, daß anstelle der Beschichtungsmasse I bzw. II die Beschichtungsmasse Verl aus Vergleichsbeispiel 1 eingesetzt wird. Die Ergebnisse finden sich in Tabelle 3.

Der Wert für die extrahierbaren Bestandteile bei Beschichtung unmittelbar nach Herstellung der Beschichtungsmasse und unmittelbar nach Härtung bei einer Vernetzungstemperatur von 150°C und einer Härtungszeit von 5 Sekunden liegt bei 3,4 %.

**Beispiel 15**

Die Beschichtungsmassen I und II gemäß Beispiel 12 werden jeweils unmittelbar nach der Herstellung mit einem Glasstab auf die nachfolgend genannten Substrate aufgezogen, so daß das Auftragsgewicht jeweils ca. 4 $g/m^2$ beträgt.

Substrat (a):  mit Polyethylen kaschiertes Papier
Substrat (b):  Niederdruckpolyethylenfolie
Substrat (c):  Hochdruckpolyethylenfolie
Substrat (d):  Polyesterfolie
Substrat (e):  Clay-gestrichenes Papier mit einem Gewicht von 140 $g/m^2$
Substrat (f):  Clay-gestrichenes Papier mit einem Gewicht von 80 $g/m^2$
Substrat (g):  Clay-gestrichenes Papier mit einem Gewicht von 135 $g/m^2$
Substrat (h):  Clay-gestrichenes Papier mit einem Gewicht von 87 $g/m^2$

Anschließend werden unmittelbar nach der Beschichtung die beschichteten Substrate bei 85°C je nach verwendetem Substrat unterschiedlich lang gehärtet. Dann wird in Abhängigkeit von der Lagerzeit der gehärteten beschichteten Substrate die Abriebfestigkeit beurteilt. Die Ergebnisse finden sich in Tabelle 4.

EP 0 868 470 B1

**Vergleichsbeispiel 4**

Die in Beispiel 15 beschriebene Arbeitsweise wird wiederholt mit der Abänderung, daß anstelle der Beschichtungsmasse I bzw. II die Beschichtungsmasse Verl aus Vergleichsbeispiel 1 eingesetzt wird.

Die Ergebnisse finden sich in Tabelle 4.

Tabelle 4

| Masse | Lagerzeit der gehärteten beschichteten Substrate in Tagen | Substrat | | | | | | | |
|---|---|---|---|---|---|---|---|---|---|
| | | (a) | (b) | (c) | (d) | (e) | (f) | (g) | (h) |
| | | Vernetzungszeit [s] | | | | | | | |
| | | 30 | 15 | 15 | 15 | 30 | 20 | 30 | 20 |
| | | Abriebfestigkeit | | | | | | | |
| I | 0 | 1 | 1 | 1 | 1 | 1 | 1 | 1 | 1 |
| | 2 | 1 | 1 | 1 | 1 | 1 | 1 | 1 | 1 |
| | 10 | 1 | 1 | 1 | 1 | 2 | 1 | 1 | 1-2 |
| | 28 | 1 | 1 | 1 | 1 | 2 | 1 | 1 | 1-2 |
| | 56 | 1 | 1 | 1 | 1 | 2 | 1 | 1 | 1-2 |
| II | 0 | 1 | 1 | 1 | 1 | 1 | 1 | 1 | 2-3 |
| | 2 | 1 | 1 | 1 | 1 | 1 | 1 | 1 | 3 |
| | 10 | 1 | 1 | 1 | 1 | 4 | 1-2 | 1 | 3 |
| | 28 | 1 | 1 | 1 | 1 | 4 | 1-2 | 1 | 3-4 |
| | 56 | 1 | 1 | 1 | 1 | 5 | 2 | 1 | 4 |
| Ver1 | 0 | 1 | 1 | 1 | 1 | 1 | 1 | 1 | 1-2 |
| | 2 | 1 | 1 | 1 | 1 | 1 | 1 | 1 | 2 |
| | 10 | 1 | 3 | 1 | 1 | 4-5 | 3 | 1 | 2 |
| | 28 | 1 | 3 | 1 | 2 | 5 | 3 | 1 | 2-3 |
| | 56 | 1 | 3 | 1 | 2 | 5 | 4 | 1 | 2-3 |

**Beispiel 16**

Die Beschichtungsmasse II gemäß Beispiel 12 wird unmittelbar nach der Herstellung mit einem Glasstab auf 65 g/m² schweres Pergaminpapier aufgezogen, so daß das Auftragsgewicht ca. 4 g/m² beträgt. Anschließend wird unmittelbar nach der Beschichtung das beschichtete Papier im UV-Gerät unterschiedliche Zeiten bestrahlt und mittels des Fingerstrichtestes beurteilt. Während der Bestrahlung erwärmt sich das beschichtete Papier auf ca. 85°C. Die Ergebnisse finden sich in Tabelle 5.

**Vergleichsbeispiel 5**

Die in Beispiel 16 beschriebene Arbeitsweise wird wiederholt mit der Abänderung, daß anstelle der Beschichtungsmasse II die Beschichtungsmasse Verl aus Vergleichsbeispiel 1 eingesetzt wird. Die Ergebnisse finden sich in Tabelle 5.

17

Tabelle 5

| | Bestrahlungszeit in Sekunden | |
|---|---|---|
| | 0,7 | 1,4 |
| Beschichtungsmasse | Fingerstrichtest | |
| II | 1-2 | 1 |
| Ver1 | 2 | 1-2 |

**Beispiel 17**

Herstellung von MQ-Harzpulver A:

Aus einer 70 %igen toluolischen Lösung eines MQ-Harzes bestehend aus $(CH_3)_3SiO_{1/2}$-, $(CH_3)_2(CH_2=CH)$ $SiO_{1/2}$- und $SiO_{4/2}$-Einheiten im Molverhältnis 0,70 : 0,10 : 1 wird nach dem in der eingangs zitierten deutschen Anmeldung mit dem Aktenzeichen 19502034.0 beschriebenen Verfahren ein rieselfähiges Harzpulver mit einem mittleren Teilchendurchmesser ($D_{50}$-Wert) von 155 µm, einer Schüttdichte von 460 kg/m$^3$ und einem mittleren Toluolgehalt von 0,07 %, bezogen auf das Gewicht des Harzpulvers, hergestellt.

Durch Vermischen der nachfolgend genannten Bestandteile wird eine Beschichtungsmasse V hergestellt:

| | |
|---|---|
| 80 | Teile Organopolysiloxan gemäß Beispiel 3 und |
| 20 | Teile des oben beschriebenen MQ-Harzpulvers, |
| 0,09 | Teile Ethinylcyclohexanol, |

ein Mischpolymerisat aus Trimethylsiloxan-, Dimethylsiloxan- und Methylhydrogensiloxaneinheiten mit einer Viskosität von 25 mm$^2$/s und einem Gehalt an Si-gebundenem Wasserstoff von 1,62 % in einer solchen Menge, daß das molare Verhältnis der Si-gebundenen Wasserstoffatome zu den Vinylgruppen des eingesetzten erfindungsgemäßen Organopolysiloxans und des Siloxanharzes den Wert 2 hat,
und Platin in Form eines Platin-1,3-divinyl-1,1,3,3-tetramethyldisiloxan-Komplexes in einer solchen Menge, daß die gesamte Mischung einen Platingehalt von 100 ppm, bezogen auf elementares Platin, aufweist.

Eine Beschichtungsmasse VI wird analog der Beschichtungsmasse V hergestellt, jedoch mit der Abänderung, daß anstelle von 80 Teilen Organopolysiloxan gemäß Beispiel 3 80 Teile Organopolysiloxan gemäß Beispiel 7 eingesetzt werden.

Des weiteren wird wie in Beispiel 12 beschrieben verfahren. Die Ergebnisse finden sich in Tabelle 6.

**Vergleichsbeispiel 6**

Die in Beispiel 17 beschriebene Arbeitsweise wird wiederholt mit der Abänderung, daß eine Beschichtungsmasse eingesetzt wird, die anstelle von 80 Teilen des Organopolysiloxans gemäß Beispiel 3 100 Teile eines linearen Mischpolymerisats aus Vinyldimethylsiloxan- und Dimethylsiloxaneinheiten mit einer Viskosität von 195 mm$^2$/s und einer Jodzahl von 6,8 enthält (Beschichtungsmasse Ver3).

Die Ergebnisse finden sich in Tabelle 6.

Bei der Härtungszeit, bei der die beschichteten Papiere hinsichtlich des Fingerstrichstests mit der Note 1 beurteilt werden, wird auch der unmittelbar nach der Härtung durchgeführte Test zur Abriebfestigkeit mit der Note 1 beurteilt.

Tabelle 6

| Mas-se | Vernetzungs-temperatur [°C] | | | | | Trennwerte [cN/cm] | | |
|---|---|---|---|---|---|---|---|---|
| | 85 | | 150 | | | Kleber | | |
| | Vernetzungszeit in Sekunden | | | | | | | |
| | 12 | 15 | 20 | 4 | Rest-kleb-kraft [%] | T-4154 | K-7476 | A-7475 |
| | Fingerstrich-test | | | | | | | |
| V | 2 | 1-2 | 1 | 1 | 115 | 15,8 | 13,1 | 13,6 |
| VI | 1-2 | 1-2 | 1 | 1 | 122 | 24,8 | 21,7 | 13,9 |
| Ver3 | 2-3 | 1-2 | 1 | 1 | 121 | 17,9 | 20,6 | 13,3 |

**Beispiel 18**

Die Beschichtungsmasse VI gemäß Beispiel 17 wird unmittelbar nach der Herstellung mit einer Handrakel auf 65 g/m² schweres Pergaminpapier aufgezogen, so daß das Auftragsgewicht ca. 1,5 g/m² beträgt.

Anschließend wird unmittelbar nach der Beschichtung das beschichtete Papier bei 150 °C 5 Sekunden gehärtet und unmittelbar nach der Härtung werden die extrahierbaren Siliconbestandteile bestimmt. Der Wert liegt bei 2,9 %.

**Patentansprüche**

1. Aliphatisch ungesättigte Reste aufweisende Organopolysiloxane, die in organischen Lösungsmitteln, ausgewählt aus Xylolen und Toluol, bei einer Temperatur von 25°C und einem Druck von 900 bis 1100 hPa zumindest zu 80 Gewichtsprozent löslich sind und mindestens eine Einheit der Formel

$$R^1{}_a R_{2-a} SiO_{2/2} \qquad (I),$$

mindestens eine Einheit der Formel

$$R^1{}_b R_{3-b} SiO_{1/2} \qquad (II),$$

mindestens eine Einheit der Formel

$$O_{1/2}R_2SiO_xYRSiO_{2/2} \qquad\qquad (III)$$

sowie gegebenenfalls mindestens eine Einheit der Formel

$$O_{1/2}R_2SiO_xYR_2SiO_{1/2} \qquad\qquad (IV)$$

enthalten, wobei

R gleich oder verschieden sein kann und einen einwertigen, gegebenenfalls substituierten, SiC-gebundenen, aliphatisch gesättigten Kohlenwasserstoffrest bedeutet,

$R^1$ gleich oder verschieden sein kann und einen einwertigen, SiC-gebundenen, gegebenenfalls substituierten, aliphatisch ungesättigten Kohlenwasserstoffrest bedeutet,

a 0, 1 oder 2 ist,

b 0, 1, 2 oder 3 ist,

x 0 oder 1 ist und

Y einen Rest $-(CR^3_2)_n CHR^3-$ mit mindestens zwei Kohlenstoffatomen bedeutet mit n gleich 0 oder einer ganzen Zahl von 1 bis 7 und $R^3$ gleich Wasserstoffatom oder einer für R angegebenen Bedeutung,

mit der Maßgabe, daß das Organopolysiloxan mindestens eine Einheit der Formel (II) mit b verschieden 0 enthält.

2. Organopolysiloxane gemäß Anspruch 1, dadurch gekennzeichnet, daß es sich bei Rest $R^1$ um den Vinylrest handelt.

3. Organopolysiloxane gemäß Anspruch 1 oder 2, dadurch gekennzeichnet, daß es sich bei Rest Y um $-CH_2-CH_2-$ und $-CH(CH_3)-$ handelt.

4. Organopolysiloxane gemäß einem oder mehreren der Ansprüche 1 bis 3, dadurch gekennzeichnet, daß sie aus Einheiten der Formel (I), (II), (III) und gegebenenfalls (IV) bestehen.

5. Verfahren zur Herstellung der Organopolysiloxane gemäß einem oder mehreren der Ansprüche 1 bis 4, dadurch gekennzeichnet, daß
lineare Organosiloxane A bestehend aus
mindestens einer Einheit der Formel

$$R^4_c R^5_{2-c}SiO_{2/2} \qquad\qquad (V),$$

und/oder mindestens einer Einheit der Formel

$$R^4_d R^5_{3-d}SiO_{1/2} \qquad\qquad (VI),$$

wobei

$R^4$ gleich oder verschieden sein kann und eine für $R^1$ angegebene Bedeutung hat,

$R^5$ gleich oder verschieden sein kann und eine für R angegebene Bedeutung hat,

c 0, 1 oder 2 ist und

d 0, 1, 2 oder 3 ist,

mit der Maßgabe, daß Organosiloxane A mindestens einen Rest $R^4$ besitzen und mindestens ein Organosiloxan A mit 2 Einheiten der Formel (VI) mit d verschieden 0 anwesend ist,
mit linearem oder cyclischem Organosiloxan B bestehend aus
mindestens einer Einheit der Formel

$$H_f R^7{}_g R^6{}_{3-f-g} SiO_{1/2} \qquad\qquad (VIII),$$

und/oder mindestens einer Einheit der Formel

$$H_e R^6{}_{2-e} SiO_{2/2} \qquad\qquad (VII),$$

wobei

$R^6$ gleich oder verschieden sein kann und eine für R angegebene Bedeutung hat,
$R^7$ eine für $R^1$ angegebene Bedeutung hat,
e 0 oder 1 ist,
f 0 oder 1 ist und
g 0, 1, 2 oder 3 ist,

mit der Maßgabe, daß die Summe g+f kleiner oder gleich 3 ist und Organosiloxan B mindestens eine Einheit der Formel (VII) mit e gleich 1 aufweist,
und gegebenenfalls aliphatische Kohlenstoff-Kohlenstoff-Mehrfachbindungen aufweisenden Kohlenwasserstoffen C sowie gegebenenfalls in Gegenwart von inertem organischen Lösungsmittel D,
in Gegenwart eines die Anlagerung von Si-gebundenem Wasserstoff an aliphatische Mehrfachbindung fördernden Katalysators E umgesetzt wird,
mit der Maßgabe, daß in der unumgesetzten Eduktmischung das molare Verhältnis der Einheiten der Formel (VI) mit d verschieden 0 zu den vorhandenen Si-gebundenen Wasserstoffatomen der Einheiten der Formel (VII) mindestens 1,3 : 1 beträgt.

6. Vernetzbare Organopolysiloxanzusammensetzungen, die

(1) Organopolysiloxane gemäß einem oder mehreren der Ansprüche 1 bis 4 oder hergestellt nach Anspruch 5,
(2) Si-gebundenen Wasserstoff aufweisende Organosiloxane,
(3) die Anlagerung von Si-gebundenem Wasserstoff an aliphatische Mehrfachbindung fördernde Katalysatoren sowie gegebenenfalls weitere Stoffe

enthalten.

7. Organopolysiloxanzusammensetzungen gemäß Anspruch 6, dadurch gekennzeichnet, daß als Organosiloxane (2), die Si-gebundene Wasserstoffatome aufweisen, lineare, cyclische oder verzweigte Organopolysiloxane aus Einheiten der Formel

$$R^8{}_h H_i SiO_{\frac{4-h-i}{2}} \qquad\qquad (IX)$$

eingesetzt werden, wobei

$R^8$ gleich oder verschieden sein kann und eine oben für R angegebene Bedeutung hat,
h 0, 1, 2 oder 3 ist und
i 0, 1 oder 2 ist, mit der Maßgabe, daß die Summe von h+i kleiner oder gleich 3 ist und durchschnittlich mindestens zwei Si-gebundene Wasserstoffatome je Molekül vorliegen.

8. Organopolysiloxanzusammensetzungen gemäß Anspruch 6 oder 7, dadurch gekennzeichnet, daß Siloxan (2) in Mengen von 0,7 bis 5 Mol Si-gebundenen Wasserstoff, bezogen auf 1 Mol aliphatische Kohlenstoff-Kohlenstoff-Mehrfachbindung des Organopolysiloxans (1), eingesetzt wird.

9. organopolysiloxanzusammensetzungen gemäß einem oder mehreren der Ansprüche 6 bis 8, dadurch gekennzeichnet, daß sie aus den Bestandteilen (1), (2), (3) und gegebenenfalls einem oder mehreren der Bestandteile (4), (5), (6), (7), organischem Lösungsmittel und Additiven bestehen.

**Claims**

1. Organopolysiloxanes containing aliphatically unsaturated radicals, which are soluble in organic solvents selected from the group consisting of xylenes and toluene to an extent of at least 80 per cent by weight, at a temperature of 25°C and a pressure of from 900 to 1100 hPa, and comprise
at least one unit of the formula

$$R^1{}_a R_{2-a} SiO_{2/2} \qquad (I),$$

at least one unit of the formula

$$R^1{}_b R_{3-b} SiO_{1/2} \qquad (II),$$

at least one unit of the formula

$$O_{1/2} R_2 SiO_x YRSiO_{2/2} \qquad (III)$$

and, if desired, at least one unit of the formula

$$O_{1/2} R_2 SiO_x YR_2 SiO_{1/2} \qquad (IV),$$

where

R    can be identical or different and is a monovalent, substituted or unsubstituted, SiC-bonded, aliphatically saturated hydrocarbon radical,

$R^1$    can be identical or different and is a monovalent, SiC-bonded, substituted or unsubstituted, aliphatically unsaturated hydrocarbon radical,

a    is 0, 1 or 2,

b    is 0, 1, 2 or 3,

x    is 0 or 1 and

Y    is a radical $-(CR^3{}_2)_n CHR^3-$ with at least two carbon atoms, where n is 0 or an integer from 1 to 7 and $R^3$ is a hydrogen atom or is as defined for R,

with the proviso that the organopolysiloxane includes at least one unit of the formula (II) where b is not 0.

2. Organopolysiloxanes according to Claim 1, characterized in that radical $R^1$ is the vinyl radical.

3. Organopolysiloxanes according to Claim 1 or 2, characterized in that radical Y is $-CH_2-CH_2$ and $-CH(CH_3)-$.

4. Organopolysiloxanes according to one or more of Claims 1 to 3, characterized in that they consist of units of the formula (I), (II), (III) and, if desired, (IV).

5. Process for preparing organopolysiloxanes according to one or more of Claims 1 to 4, characterized in that linear organosiloxanes A consisting of
at least one unit of the formula

$$R^4{}_c R^5{}_{2-c} SiO_{2/2} \qquad (V)$$

and/or at least one unit of the formula

$$R^4{}_d R^5{}_{3-d} SiO_{1/2} \qquad (VI),$$

where

R$^4$ can be identical or different and is as defined for R$^1$,
R$^5$ can be identical or different and is as defined for R,
c is 0, 1 or 2, and
d is 0, 1, 2 or 3,

with the proviso that organosiloxanes A possess at least one radical R$^4$ and that there is at least one organosiloxane A having 2 units of the formula (VI) where d is not 0,
are reacted with linear or cyclic organosiloxane B consisting of
at least one unit of the formula

$$H_f R^7{}_g R^6{}_{3-f-g} SiO_{1/2} \qquad\qquad (VIII),$$

and/or at least one unit of the formula

$$H_e R^6{}_{2-e} SiO_{2/2} \qquad\qquad (VII),$$

where

R$^6$ can be identical or different and is as defined for R,
R$^7$ is as defined for R$^1$,
e is 0 or 1,
f is 0 or 1, and
g is 0, 1, 2 or 3,

with the proviso that the sum g+f is less than or equal to 3 and that organosiloxane B has at least one unit of the formula (VII) where e is 1,
and, if desired, with hydrocarbons C containing aliphatic carbon-carbon multiple bonds
and, if desired, in the presence of inert organic solvent D,
in the presence of a catalyst E which promotes the addition of Si-bonded hydrogen onto aliphatic multiple bond,
with the proviso that in the unreacted mixture of starting materials the molar ratio of the units of the formula (VI) where d is not 0 to the Si-bonded hydrogen atoms present in the units of the formula (VII) is at least 1.3:1.

6. Crosslinkable organopolysiloxane compositions which comprise

(1) an organopolysiloxane according to one or more of Claims 1 to 4 or prepared according to Claim 5,
(2) organosiloxanes containing Si-bonded hydrogen,
(3) catalysts which promote the addition of Si-bonded hydrogen onto aliphatic multiple bond and, if desired, further substances.

7. Organopolysiloxane compositions according to Claim 6, characterized in that the organosiloxanes (2) containing Si-bonded hydrogen atoms used are linear, cyclic or branched organopolysiloxanes comprising units of the formula

$$R^8{}_h H_i SiO_{\frac{4-h-i}{2}} \qquad\qquad (IX)$$

where

R$^8$ can be identical or different and is as defined above for R,
h is 0, 1, 2 or 3, and
i is 0, 1 or 2,

with the proviso that the sum of h+i is less than or equal to 3 and that there are on average at least two Si-bonded hydrogen atoms per molecule.

8. Organopolysiloxane compositions according to Claim 6 or 7, characterized in that siloxane (2) is employed in quantities of from 0.7 to 5 mol of Si-bonded hydrogen, based on 1 mol of aliphatic carbon-carbon multiple bond in the organopolysiloxane (1).

9. Organopolysiloxane compositions according to one or more of Claims 6 to 8, characterized in that they consist of the constituents (1), (2), (3) and, if desired, one or more of the constituents (4), (5), (6), (7), organic solvent and additives.

**Revendications**

1. Organopolysiloxanes présentant des radicaux aliphatiquement insaturés qui sont solubles à au moins 80 % en poids dans des solvants organiques, choisis parmi les xylènes et le toluène, à une température de 25°C et à une pression de 900 à 1100 hPa et contenant
au moins une unité de formule

$$R^1_a R_{2-a} SiO_{2/2} \qquad (I),$$

au moins une unité de formule

$$R^1_b R_{3-b} SiO_{1/2} \qquad (II),$$

au moins une unité de formule

$$O_{1/2} R_2 SiO_x YRSiO_{2/2} \qquad (III),$$

ainsi que le cas échéant au moins une unité de formule

$$O_{1/2} R_2 SiO_x YR_2 SiO_{1/2} \qquad (IV),$$

dans lesquelles

R peut être identique ou différent et signifie un radical hydrocarboné aliphatiquement saturé, monovalent, éventuellement substitué, lié au SiC,

$R^1$ peut être identique ou différent et signifie un radical hydrocarboné aliphatiquement insaturé, monovalent, lié au SiC, éventuellement substitué,

a est 0, 1 ou 2,

b est 0, 1, 2 ou 3,

x est 0 ou 1, et

y signifie un radical -$(CR^3_2)_n CHR^3$- avec au moins deux atomes de carbone avec n égal à 0 ou à un nombre entier de 1 à 7 et $R^3$ est égal à un atome d'hydrogène ou à une signification donnée pour R,

étant entendu que l'organopolysiloxane contient au moins une unité de formule (II) avec b différent de 0.

2. Organopolysiloxanes suivant la revendication 1, caractérisés en ce que le radical $R^1$ concerne le radical vinylique.

3. Organopolysiloxanes suivant la revendication 1 ou 2, caractérisés en ce que le radical Y concerne -$CH_2$-$CH_2$- et -$CH(CH_3)$-.

4. Organopolysiloxanes suivant l'une ou plusieurs des revendications 1 à 3, caractérisés en ce qu'ils sont constitués d'unités de formule (I), (II), (III) et le cas échéant (IV).

**5.** Procédé de préparation des organopolysiloxanes suivant l'une ou plusieurs des revendications 1 à 4, caractérisé en ce qu'on transforme
des organosiloxanes linéaires A constitués d'au moins une unité de formule

$$R^4{}_c R^5{}_{2-c} SiO_{2/2} \qquad (V),$$

et/ou au moins d'une unité de formule

$$R^4{}_d R^5{}_{3-d} SiO_{1/2} \qquad (VI),$$

dans lesquelles

$R^4$ peut être identique ou différent et a une signification donnée pour $R^1$,
$R^5$ peut être identique ou différent et a une signification donnée pour R,
c est 0, 1 ou 2, et
d est 0, 1, 2, ou 3,

étant entendu que les organosiloxanes A possèdent au moins un radical $R^4$ et qu'au moins un organosiloxane A avec 2 unités de formule (VI) avec d différent de 0, soit présent
avec un organosiloxane B linéaire ou cyclique constitué d'au moins une unité de formule

$$H_f R^7{}_g R^6{}_{3-f-g} SiO_{1/2} \qquad (VIII),$$

et/ou d'au moins une unité de formule

$$H_e R^6{}_{2-e} SiO_{2/2} \qquad (VII),$$

dans lesquelles

$R^6$ peut être identique ou différent et a une signification donnée pour R,
$R^7$ a une signification donnée pour $R^1$,
e est 0 ou 1,
f est 0 ou 1, et
g est 0, 1, 2 ou 3,

étant entendu que la somme de g+f est inférieure ou égale à 3 et l'organosiloxane B présente au moins une unité de formule (VII) avec e égal à 1,
et le cas échéant des hydrocarbures C présentant des liaisons multiples aliphatiques carbone-carbone ainsi que le cas échéant en présence d'un solvant D inerte organique,
en présence d'un catalyseur E favorisant l'addition d'hydrogène lié au Si à une liaison aliphatique multiple,
étant entendu que, dans le mélange de produits de départ non transformés, le rapport molaire des unités de formule (VI) avec d différent de 0 par rapport aux atomes d'hydrogène présents liés au Si des unités de formule (VII) s'élève à au moins 1,3 : 1.

**6.** Compositions d'organopolysiloxanes réticulables qui contiennent

(1) des organopolysiloxanes suivant l'une ou plusieurs des revendications 1 à 4 ou préparés suivant la revendication 5;
(2) des organosiloxanes présentant de l'hydrogène lié au Si;
(3) des catalyseurs favorisant l'addition d'hydrogène lié au Si à une liaison aliphatique multiple, ainsi que le cas échéant, d'autres substances.

**7.** Compositions d'organopolysiloxanes suivant la revendication 6, caractérisées en ce qu'on utilise comme organosiloxanes (2) qui présentent des atomes d'hydrogène liés au Si, des organopolysiloxanes linéaires, cycliques ou ramifiés constitués d'unités de formule

$$R^8{}_h H_i SiO_{\frac{4-h-i}{2}} \qquad (IX)$$

dans laquelle

$R^8$    peut être identique ou différent et a une signification donnée ci-dessus pour R;

h    est 0, 1, 2 ou 3, et

i    est 0, 1 ou 2, étant entendu que la somme de h+i est inférieure ou égale à 3 et qu'il y a en moyenne au moins deux atomes d'hydrogène liés au Si par molécule.

8. Compositions d'organopolysiloxanes suivant la revendication 6 ou 7, caractérisées en ce que le siloxane (2) est utilisé en quantités de 0,7 à 5 moles d'hydrogène lié au Si, sur base de 1 mole de liaison multiple aliphatique carbone-carbone de l'organopolysiloxane (1).

9. Compositions d'organopolysiloxanes suivant l'une ou plusieurs des revendications 6 à 8 caractérisées en ce qu'elles sont constituées des constituants (1), (2), (3) et le cas échéant d'un ou plusieurs des constituants (4), (5), (6), (7), d'un solvant organique et d'additifs.